# EUROPEAN PATENT SPECIFICATION

(11) **EP 4 343 905 B1**
(45) Date of publication and mention of the grant of the patent: **25.02.2026**
(21) Application number: 22870349.2
(22) Date of filing: 16.09.2022
(51) Int. Cl.: B65H 45/101, H01M 10/0583, G01B 11/27, H01M 4/04, H01M 10/04, G01B 11/02

(54) **MANUFACTURING METHOD OF AN ELECTRODE ASSEMBLY, AND MANUFACTURING APPARATUS OF AN ELECTRODE ASSEMBLY**
HERSTELLUNGSVERFAHREN FÜR EINE ELEKTRODENANORDNUNG, UND VORRICHTUNG ZUR HERSTELLUNG EINER ELEKTRODENANORDNUNG
PROCÉDÉ DE FABRICATION D'UN ENSEMBLE ÉLECTRODE, ET DISPOSITIF DE FABRICATION D'UN ENSEMBLE ÉLECTRODE

(30) Priority: 16.09.2021 KR 20210124048
(43) Date of publication of application: 27.03.2024
(73) Proprietor: LG Energy Solution, Ltd., Seoul 07335 (KR)
(72) Inventor: SEO, Tai Joon, Daejeon 34122 (KR); PARK, Lae Seo, Daejeon 34122 (KR)
(74) Representative: Plasseraud IP
(86) International application number: PCT/KR2022/013888
(87) International publication number: WO 2023/043265

(56) References cited:
- JP-A- 2002 270 242
- JP-A- 2017 016 946
- JP-A- 2018 018 712
- KR-A- 20150 120 790
- KR-A- 20200 018 091
- KR-A- 20200 071 301
- KR-A- 20200 071 301
- US-A1- 2013 260 230

## Description

### [Technical Field]

The present invention relates to a manufacturing method of an electrode assembly according to claim 1, and to a manufacturing apparatus of an electrode assembly according to claim 9.

### [Background Art]

Due to rapid increase in use of fossil fuels, demand for use of alternative energy or clean energy is increasing. Thus, the field of power generation and electricity storage, which use electrochemical reaction, is most actively studied.

As a representative example of electrochemical devices using electrochemical energy, secondary batteries are currently used and use thereof is gradually expanding.

Recently, as technology for portable devices, such as portable computers, portable phones, cameras, and the like, continues to develop and demand therefor continues to increase, demand for secondary batteries as energy sources is rapidly increasing. Among these secondary batteries, research on lithium secondary batteries having high energy density, high operating voltage, long cycle lifespan, and a low self-discharge rate has been underway, and such lithium secondary batteries are commercially available and widely used.

In addition, as interest in environmental problems is increasing, research into electric vehicles, hybrid electric vehicles, and the like that can replace vehicles using fossil fuels, such as gasoline vehicles, diesel vehicles, and the like, which are one of the main causes of air pollution, is underway. As a power source of electric vehicles, hybrid electric vehicles, and the like, a nickel-metal hydride secondary battery is mainly used. However, research into lithium secondary batteries having high energy density and high discharge voltage is actively carried out and some lithium secondary batteries are commercially available.

In the lithium secondary battery, a positive electrode or a negative electrode active material, a binder, and a conductive material are coated on a current collector in a form of a slurry and then the coated current collector is dried to form an electrode mixture layer so that a positive electrode and a negative electrode are manufactured, and a separator is interposed between the positive electrode and the negative electrode. The lithium secondary battery is manufactured by embedding an electrode assembly obtained by laminating the positive electrode and the negative electrode with the separator interposed therebetween into a battery case together with an electrolyte solution.

In addition, the electrode assembly may be manufactured in a form of stacking or folding components of the electrode assembly, or may be manufactured in a form of manufacturing a unit cell as an electrode assembly including the electrode and the separator and stacking or folding the manufactured unit cell.

That is, in general, the electrode assembly composed of a stacked structure of a positive electrode/separator/negative electrode may be manufactured, and for example, the electrode assembly is configured so that the positive electrode and the negative electrode are alternately and sequentially stacked between separator sheets arranged in a zigzag pattern. In the manufacturing method of the electrode assembly, the electrode assembly is formed by repeating a method in which the positive electrode is disposed, a separator sheet is disposed above or on the positive electrode, the negative electrode is disposed above or on the separator sheet, and then the separator sheet is folded so as to cover the negative electrode disposed above the separator sheet.

In this case, since a following electrode is disposed in a state in which the separator sheet is covered above an electrode (the negative electrode or the positive electrode) when the electrode is disposed, it is difficult to determine whether the following electrode is aligned at an accurate position. Because of this, if the alignment of the electrode is not made at the accurate position, a defect may occur at a completed electrode assembly, and in addition, if it is checked whether the alignment of the electrodes is made in the accurate position every time the electrodes is stacked, there is a problem in which a process is delayed and becomes complicated.

In the prior art, documents JP 2018 018712 A, JP 2002 270242 A, KR 2020 0071301 A concern manufacturing of non-aqueous secondary batteries and battery cells. JP 2018 018712 A furthermore discloses a manufacturing method according to the preamble of claim 1, and a manufacturing apparatus according to the preamble of claim 9.

### [Disclosure]

### [Technical Problem]

An object to be solved by the present invention is to provide a manufacturing method of an electrode assembly capable of aligning a position of each electrode at an accurate position by a simple method in a process of manufacturing the electrode assembly by alternately stacking an electrode and a separator.

### [Technical Solution]

According to the present invention, a manufacturing method of an electrode assembly in which a positive electrode and a negative electrode are alternately stacked and a separator is positioned between the positive electrode and the negative electrode includes: a first step of disposing the positive electrode above a first separator; a second step of disposing a second separator above the positive electrode to cover the positive electrode; a third step of disposing a negative electrode above the second separator; and a fourth step of disposing a third separator above the negative electrode to cover the negative electrode. In the first step and the third step, a laser beam is irradiated to indicate positions at which the positive electrode and the negative electrode are disposed.

A size of the negative electrode may be larger than a size of the positive electrode, and a thickness of the laser beam may correspond to a size of a gap between a position where one side of the negative electrode is disposed and a position where one side of the positive electrode corresponding to the one side of the negative electrode is disposed.

A first side of the laser beam in a longitudinal direction may coincide with the one side of the positive electrode, and a second side of the laser beam parallel to the first side may coincide with the one side of the negative electrode.

The first separator, the second separator, and the third separator may be integrally formed as one separator sheet.

The second step may include covering the positive electrode with one side of the separator sheet, and the fourth step may include covering the negative electrode with the other side of the separator sheet.

The first step to the fourth step may be repeatedly performed, and an irradiation position of the laser beam may be fixed during the repeatedly performed process.

The laser beam may be irradiated from a laser oscillator, and a height of the laser oscillator from an irradiation object may be adjusted by a height adjusting device.

As the height of the laser oscillator from the irradiation object increases, a thickness of the laser beam may become thin.

According to the present invention, a manufacturing apparatus of an electrode assembly in which a positive electrode and a negative electrode are alternately stacked and a separator is positioned between the positive electrode and the negative electrode according to an embodiment of the present invention comprises a laser oscillator that irradiates a laser beam toward the positive electrode and the negative electrode. A thickness of the laser beam irradiated from the laser oscillator corresponds to a size of a gap between a position where one side of the negative electrode is disposed and a position where one side of the positive electrode corresponding to the one side of the negative electrode is disposed.

The manufacturing apparatus of the electrode assembly may further include a height adjusting device connected to the laser oscillator and adjusting a height between the laser oscillator and an irradiation object. As a height of the laser oscillator from the irradiation object increases, a thickness of the laser beam becomes thin.

### [Advantageous Effects]

According to embodiments of the present invention, it is possible to align a positive electrode and a negative electrode continuously stacked at an accurate position without adding a complicated process when an electrode assembly is manufactured so that a defect is prevented from occurring without delaying a process.

Effects of the present invention are not limited to the foregoing effects, and other non-mentioned effects will be clearly understood by those skilled in the art from the description below.

### [Description of the Drawings]

FIGS. 1 to 4 are views showing a manufacturing method of an electrode assembly according to an embodiment of the present invention.
FIG. 5 is a view for explaining the manufacturing method of the electrode assembly according to an embodiment of the present invention on a plane.
FIG. 6A and FIG. 6B are views illustrating a subsequent process in the manufacturing method of the electrode assembly according to an embodiment of the present invention.
FIG. 7 is a view illustrating a change in a thickness of a laser beam according to a height of a laser oscillator in the manufacturing method of the electrode assembly according to an embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

Parts that are irrelevant to the description are omitted in the drawings for clear description of the present invention, and like reference numerals designate like elements throughout the specification.

Further, the size and thickness of the elements shown in the drawings are arbitrarily illustrated for better understanding and ease of description, and the present invention is not necessarily limited thereto. In the drawings, the thickness of layers, films, panels, regions, etc., are exaggerated for clarity. In the drawings, for convenience of description, the thickness of layers, films, panels, areas, etc., are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means positioned on or below the object portion, and does not necessarily mean positioned on the upper side of the object portion based on a gravitational direction.

In addition, unless explicitly described to the contrary, the word "comprise", and variations such as "comprises" or "comprising", will be understood to imply the inclusion of stated elements but not the exclusion of any other elements.

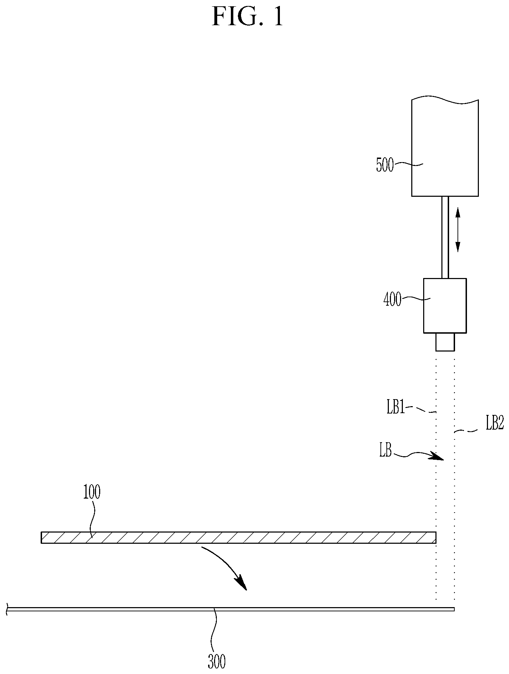

Hereinafter, a manufacturing method of an electrode assembly according to an embodiment of the present invention will be described with reference to FIGS. 1 to 6.

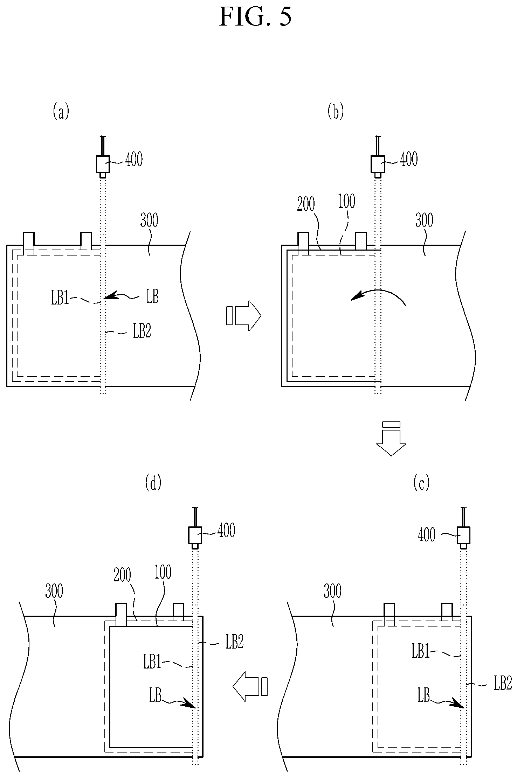

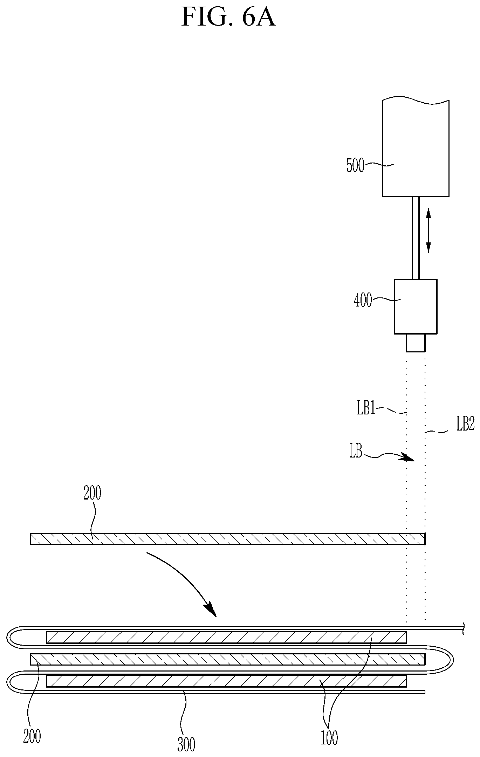

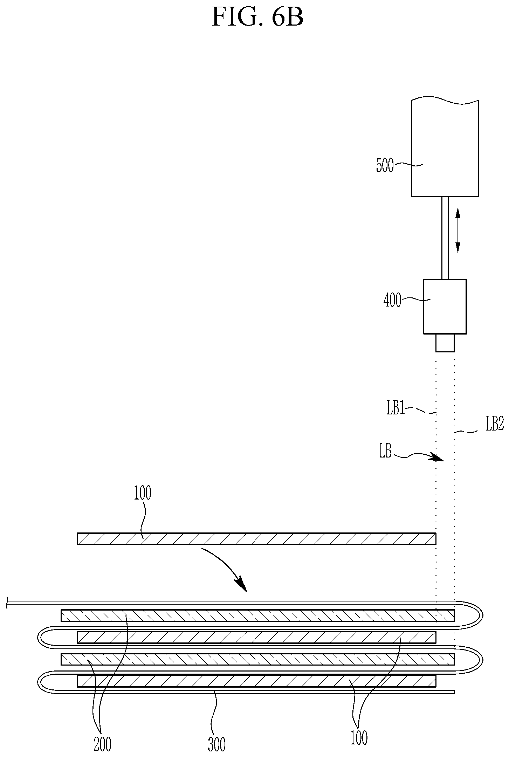

FIGS. 1 to 4 are views showing a manufacturing method of an electrode assembly according to an embodiment of the present invention, FIG. 5 is a view for explaining the manufacturing method of the electrode assembly according to an embodiment of the present invention on a plane, and FIG. 6A and FIG. 6B are views illustrating a subsequent process in the manufacturing method of the electrode assembly according to an embodiment of the present invention.

Referring to FIGS. 1 to 5, the manufacturing method of the electrode assembly according to the embodiment of the present invention is a method of manufacturing the electrode assembly in which a positive electrode 100 and a negative electrode 200 are alternately stacked and a separator (or a separation membrane) 300 is positioned between the positive electrode 100 and the negative electrode 200.

First, as shown in FIG. 1, the positive electrode 100 is disposed above or on the separator 300 (a first step).

The separator 300 may be a separator sheet in which separators disposed between the electrodes are integrally formed, but is not limited thereto. A first separator 300 disposed below the positive electrode 100 may be referred to as a first separator. If the separator 300 has a porous structure that is interposed between the positive electrode 100 and the negative electrode 200, has an insulating property, and allows ion movement, a material of the separator is not particularly limited and the separator may be appropriately used.

The positive electrode 100 disposed above the separator 300 may be manufactured by applying (or coating) a mixture of a positive electrode active material, a conductive material, and a binder above or on a current collector and by drying and pressing the applied mixture above the current collector.

In the first step, a position of the positive electrode 100 is marked by radiating a laser beam LB from a laser oscillator 400 so that the positive electrode 100 may be disposed at a desired position. That is, the laser beam LB may be irradiated in a straight line having a thickness on one surface of an irradiation object. In this case, the laser beam LB in the straight line may extend in a longitudinal direction of the laser beam LB and may have two sides LB1 and LB2 parallel to each other. A first side LB1 positioned inside the separator 300 may be irradiated to coincide with one side of the positive electrode 100 so that a placement position of the positive electrode is indicated.

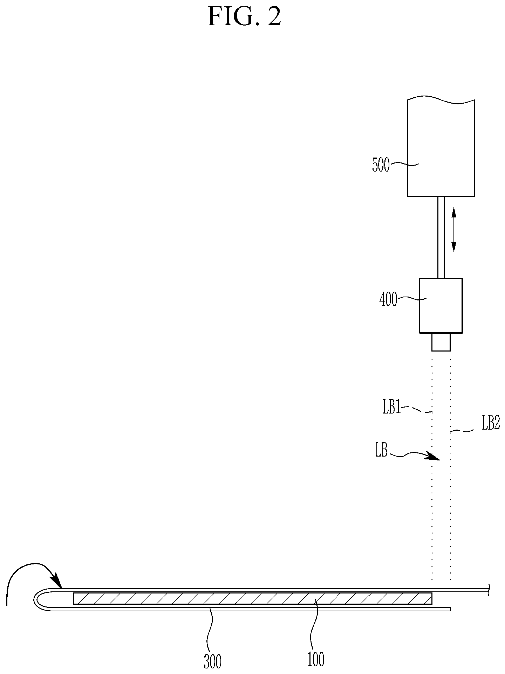

Next, as shown in FIG. 2, the separator 300 is disposed on the positive electrode 100 to cover the positive electrode 100 (a second step).

In this case, the separator 300 may be disposed by covering an upper portion of the positive electrode 100 with one side of the separator 300 that is positioned below the positive electrode 100 and is in a form of a sheet. That is, the upper portion of the positive electrode 100 is covered by folding the separator 300 in a direction of an arrow in FIG. 2. Thus, a second separator 300 disposed at the upper portion of the positive electrode 100 may be referred to as a second separator.

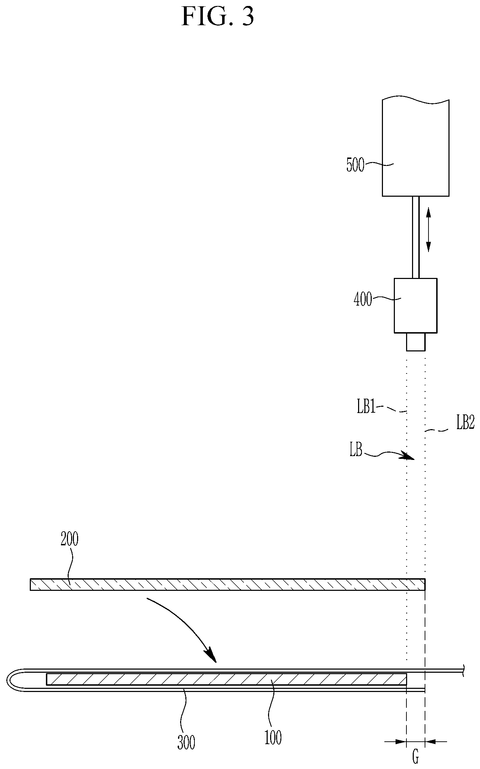

Next, as shown in FIG. 3, the negative electrode 200 is disposed above or on the separator 300 (a third step).

The negative electrode 200 may be manufactured by applying a mixture of a negative electrode active material, a conductive material, and a binder above or on a current collector and by drying and pressing the applied mixture above the current collector.

In the third step, the negative electrode 200 needs to be aligned at an accurate position corresponding to the position of the positive electrode 100 already disposed therebelow. However, since the separator 300 covers the positive electrode 100, it is difficult to determine an accurate position of the positive electrode 100 positioned below the separator 300. Therefore, there is a problem in which it is not easy to detect an accurate position of the negative electrode 200 corresponding to the accurate position of the positive electrode 100 and to align the negative electrode at the accurate position of the negative electrode. However, since the accurate position of the negative electrode 200 is indicated by irradiating the laser beam LB in the present embodiment, the accurate position of the negative electrode 200 may be checked by the laser beam LB even if the position of the electrode positioned below is covered by the separator 300. Thus, it is possible to align the negative electrode 200 at the accurate position.

In this case, the negative electrode 200 may have a larger area than the positive electrode 100, and a thickness of the laser beam LB corresponds to a size difference between the negative electrode 200 and the positive electrode 100. Specifically, the thickness of the laser beam LB corresponds to a size of a gap between a position where one side of the negative electrode 200 is disposed and a position where one side of the positive electrode 100 corresponding to the one side of the negative electrode 200 is disposed. That is, as shown in FIG. 3, FIG. 5 (a), and FIG. 5 (b), by irradiating a single laser beam LB having the same thickness as a gap G between an end portion of the negative electrode 200 and an end portion of the positive electrode 100, it is possible to simultaneously indicate the position of the positive electrode 100 and the position of the negative electrode 200. In a state where the laser beam LB is irradiated, a second side LB2, which is an outer side of the laser beam LB, indicates a position of one side of the negative electrode 200. Thus, as shown in FIG. 3 and FIG. 5 (b), by disposing the one side of the negative electrode 200 to coincide with the second side LB2, the negative electrode 200 may be aligned at the accurate position.

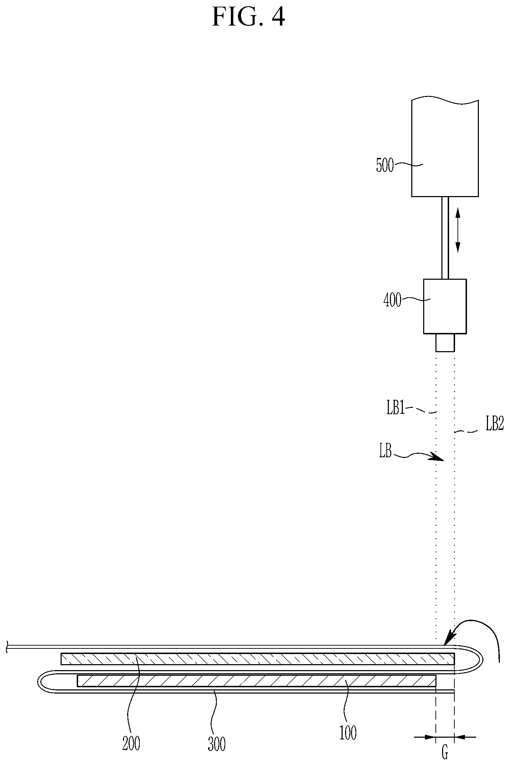

Next, as shown in FIG. 4, the separator 300 is disposed above or on the negative electrode 200 to cover the negative electrode 200 (a fourth step).

In this case, the separator 300 may be disposed by covering an upper portion of the negative electrode 200 with one side of the separator 300 that is positioned below the negative electrode 200 and is in a form of a sheet. That is, the negative electrode 200 may be covered by folding the separator 300 in an opposite direction to a direction in which the separator 300 is folded in the second step. For example, the separator 300 may be folded in a direction of an arrow in FIG. 4 and in a direction of an arrow in FIG. 5 (b). Thus, a third separator 300 disposed at the upper portion of the negative electrode 200 may be referred to as a third separator.

By repeating the above first to fourth steps, the electrode assembly may be completed by stacking the positive electrode 100 and the negative electrode 200 as many times as desired. In this regard, FIGS. 6A and 6B show a state in which stacking is further performed after the first to fourth steps. That is, FIG. 6A shows a step of stacking an additional positive electrode 100 and the separator 300 and then stacking the negative electrode 200 again after the fourth step, and FIG. 6B shows a step of further stacking the positive electrode 100 after covering the separator 300 that follows the step of FIG. 6B.

In this process, by fixing the laser beam LB at the same position and continuously irradiating the laser beam LB, a disposition position of the positive electrode 100 and a disposition position of the negative electrode 200 may be indicated in the same way. Thus, it is possible to dispose the positive electrode 100 and the negative electrode 200 at the same position without occurrence of error even if the process continues continuously. In particular, by a simple configuration of irradiating one laser beam LB having a width corresponding to the gap between an end portion of the negative electrode 200 and an end portion of the positive electrode 100 without adding a particularly complicated process, there is an advantage in which both the position of the positive electrode 100 and the position of the negative electrode 200 may be indicated. Therefore, according to an embodiment of the present invention, it is possible to prevent a defect due to an alignment error by aligning the positive electrode 100 and the negative electrode 200 at an accurate position through a simple process.

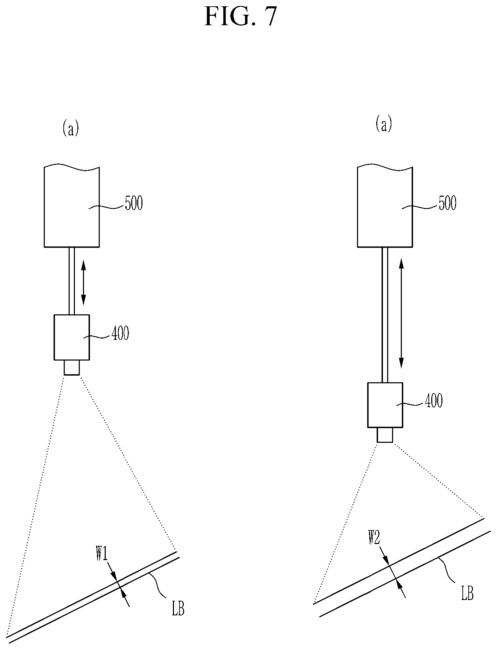

Next, with reference to FIG. 7, a thickness adjustment of the laser beam LB according to an embodiment of the present invention will be described.

FIG. 7 is a view illustrating a change in a thickness of a laser beam according to a height of the laser oscillator in the manufacturing method of the electrode assembly according to an embodiment of the present invention.

As shown in FIG. 7, the laser oscillator 400 used in the manufacturing method of the electrode assembly according to the embodiment of the present invention may be connected to a height adjusting device 500 so that a height from the irradiation object is variably adjusted. In this case, as a height from the irradiation object increases, a thickness of the laser beam LB decreases. That is, when the laser oscillator 400 is moved upward by the height adjusting device 500 so as to increase the height from the irradiation object as shown in FIG. 7 (a), a width W1 of the laser beam LB becomes thin. On the other hand, when the laser oscillator 400 is moved downward by the height adjusting device 500 so as to decrease the height from the irradiation object as shown in FIG. 7 (b), a width W2 of the laser beam LB becomes thick. The height adjusting device 500 capable of such control is not particularly limited, and may be appropriately selected and applied.

According to this configuration, since a thickness of the laser beam LB for indicating the positions of the positive electrode 100 and the negative electrode 200 is easily changed according to a configuration, specification, or the like of the electrode, various specifications of electrode assemblies may be manufactured without special modification of a manufacturing apparatus.

While this invention has been described in connection with what is presently considered to be practical embodiments, it is to be understood that the invention is not limited to the disclosed embodiments. On the contrary, it is intended to cover various modifications included within the scope of the appended claims.

### <Description of symbols>

100: positive electrode
200: negative electrode
300: separator
400: laser oscillator
LB: laser beam

## Claims

1. A manufacturing method of an electrode assembly in which a positive electrode (100) and a negative electrode (200) are alternately stacked and a separator is positioned between the positive electrode and the negative electrode, comprising:
a first step of disposing the positive electrode (100) above a first separator;
a second step of disposing a second separator above the positive electrode (100) to cover the positive electrode;
a third step of disposing a negative electrode (200) above the second separator; and
a fourth step of disposing a third separator above the negative electrode to cover the negative electrode (200),
**characterized in that** in the first step and the third step, a laser beam (LB) is irradiated to indicate positions at which the positive electrode (100) and the negative electrode (200) are disposed.

2. The manufacturing method of the electrode assembly of claim 1, wherein a size of the negative electrode (200) is larger than a size of the positive electrode (100), and a thickness of the laser beam (LB) corresponds to a size of a gap between a position where one side of the negative electrode (200) is disposed and a position where one side of the positive electrode (100) corresponding to the one side of the negative electrode (200) is disposed.

3. The manufacturing method of the electrode assembly of claim 2, wherein a first side (LB1) of the laser beam in a longitudinal direction coincides with the one side of the positive electrode (100), and a second side (LB2) of the laser beam (LB) parallel to the first side coincides with the one side of the negative electrode (200).

4. The manufacturing method of the electrode assembly of claim 1, wherein the first separator, the second separator, and the third separator are integrally formed as one separator sheet (300).

5. The manufacturing method of the electrode assembly of claim 4, wherein the second step includes covering the positive electrode (100) with one side of the separator sheet (300), and the fourth step includes covering the negative electrode (200) with the other side of the separator sheet (300).

6. The manufacturing method of the electrode assembly of claim 1, wherein the first step to the fourth step are repeatedly performed, and an irradiation position of the laser beam (LB) is fixed during the repeatedly performed process.

7. The manufacturing method of the electrode assembly of claim 1, wherein the laser beam (LB) is irradiated from a laser oscillator (400), and a height of the laser oscillator (400) from an irradiation object is adjusted by a height adjusting device (500).

8. The manufacturing method of the electrode assembly of claim 7, wherein as the height of the laser oscillator (400) increases from the irradiation object, a thickness of the laser beam (LB) becomes thin.

9. A manufacturing apparatus of an electrode assembly in which a positive electrode (100) and a negative electrode (200) are alternately stacked and a separator is positioned between the positive electrode and the negative electrode, comprising a laser oscillator (400) that irradiates a laser beam (LB) toward the positive electrode and the negative electrode,
**characterized in that** a thickness of the laser beam (LB) irradiated from the laser oscillator (400) corresponds to a size of a gap between a position where one side of the negative electrode (200) is disposed and a position where one side of the positive electrode (100) corresponding to the one side of the negative electrode (200) is disposed.

10. The manufacturing apparatus of the electrode assembly of claim 9, further comprising a height adjusting device (500) connected to the laser oscillator (400) and adjusting a height between the laser oscillator and an irradiation object,
wherein as a height of the laser oscillator (400) increases from the irradiation object, a thickness of the laser beam (LB) becomes thin.

## Patentansprüche

1. Herstellungsverfahren für eine Elektrodenanordnung, in welcher eine positive Elektrode (100) und eine negative Elektrode (200) abwechselnd gestapelt sind und ein Separator zwischen der positiven Elektrode und der negativen Elektrode positioniert ist, umfassend:
einen ersten Schritt eines Anordnens der positiven Elektrode (100) über einem ersten Separator;
einen zweiten Schritt eines Anordnens eines zweiten Separators über der positiven Elektrode (100), um die positive Elektrode zu bedecken;
einen dritten Schritt eines Anordnens einer negativen Elektrode (200) über dem zweiten Separator; und
einen vierten Schritt eines Anordnens eines dritten Separators über der negativen Elektrode, um die negative Elektrode (200) zu bedecken,
**dadurch gekennzeichnet, dass** in dem ersten Schritt und dem dritten Schritt ein Laserstrahl (LB) eingestrahlt wird, um Positionen anzuzeigen, an welchen die positive Elektrode (100) und die negative Elektrode (200) angeordnet sind.

2. Herstellungsverfahren für die Elektrodenanordnung nach Anspruch 1, wobei eine Größe der negativen Elektrode (200) größer als eine Größe der positiven Elektrode (100) ist und eine Dicke des Laserstrahls (LB) einer Größe eines Abstands zwischen einer Position, an welcher eine Seite der negativen Elektrode (200) angeordnet ist, und einer Position entspricht, an welcher eine Seite der positiven Elektrode (100) angeordnet ist, welche der einen Seite der negativen Elektrode (200) entspricht.

3. Herstellungsverfahren für die Elektrodenanordnung nach Anspruch 2, wobei eine erste Seite (LB1) des Laserstrahls in einer longitudinalen Richtung mit der einen Seite der positiven Elektrode (100) zusammenfällt und eine zweite Seite (LB2) des Laserstrahls (LB) parallel zu der ersten Seite mit der einen Seite der negativen Elektrode (200) zusammenfällt.

4. Herstellungsverfahren für die Elektrodenanordnung nach Anspruch 1, wobei der erste Separator, der zweite Separator und der dritte Separator integral als eine Separator Blatt (300) gebildet sind.

5. Herstellungsverfahren für die Elektrodenanordnung nach Anspruch 4, wobei der zweite Schritt ein Bedecken der positiven Elektrode (100) mit einer Seite der Separator Blatt (300) umfasst und der vierte Schritt ein Bedecken der negativen Elektrode (200) mit der anderen Seite der Separator Blatt (300) umfasst.

6. Herstellungsverfahren für die Elektrodenanordnung nach Anspruch 1, wobei der erste Schritt bis der vierte Schritt wiederholt durchgeführt werden und eine Einstrahlungsposition des Laserstrahls (LB) während des wiederholt durchgeführten Prozesses festgesetzt ist.

7. Herstellungsverfahren für die Elektrodenanordnung nach Anspruch 1, wobei der Laserstrahl (LB) von einem Laser-Oszillator (400) eingestrahlt wird und eine Höhe des Laser-Oszillators (400) von einem Einstrahlungsobjekt durch eine Höhen-Anpassungsvorrichtung (500) angepasst wird.

8. Herstellungsverfahren für die Elektrodenanordnung nach Anspruch 7, wobei wenn die Höhe des Laser-Oszillators (400) von dem Einstrahlungsobjekt zunimmt, eine Dicke des Laserstrahls (LB) dünn wird.

9. Herstellungsvorrichtung für eine Elektrodenanordnung, in welcher eine positive Elektrode (100) und eine negative Elektrode (200) abwechselnd gestapelt sind und ein Separator zwischen der positiven Elektrode und der negativen Elektrode positioniert ist, umfassend einen Laser-Oszillator (400), welcher einen Laserstrahl (LB) in Richtung der positiven Elektrode und der negativen Elektrode einstrahlt, **dadurch gekennzeichnet, dass** eine Dicke des Laserstrahls (LB), welcher von dem Laser-Oszillator (400) eingestrahlt wird, einer Größe eines Abstands zwischen einer Position, an welcher eine Seite der negativen Elektrode (200) angeordnet ist, und einer Position entspricht, an welcher eine Seite der positiven Elektrode (100) angeordnet ist, welche der einen Seite der negativen Elektrode (200) entspricht.

10. Herstellungsvorrichtung für die Elektrodenanordnung nach Anspruch 9, ferner umfassend eine Höhen-Anpassungsvorrichtung (500), welche mit dem Laser-Oszillator (400) verbunden ist und eine Höhe zwischen dem Laser-Oszillator und einem Einstrahlungsobjekt anpasst, wobei wenn eine Höhe des Laser-Oszillators (400) von dem Einstrahlungsobjekt zunimmt, eine Dicke des Laserstrahls (LB) dünn wird.

## Revendications

1. Procédé de fabrication d'un ensemble électrode dans lequel une électrode positive (100) et une électrode négative (200) sont empilées alternativement, et un séparateur est positionné entre l'électrode positive et l'électrode négative, comprenant :
une première étape de disposition de l'électrode positive (100) au-dessus d'un premier séparateur ;
une deuxième étape de disposition d'un deuxième séparateur au-dessus de l'électrode positive (100) afin de recouvrir l'électrode positive ;
une troisième étape de disposition d'une électrode négative (200) au-dessus du deuxième séparateur ; et
une quatrième étape de disposition d'un troisième séparateur au-dessus de l'électrode négative afin de recouvrir l'électrode négative (200),
**caractérisé en ce qu'**au cours de la première étape et de la troisième étape, un faisceau laser (LB) est émis pour indiquer les positions où sont disposées l'électrode positive (100) et l'électrode négative (200).

2. Procédé de fabrication de l'ensemble électrode selon la revendication 1, dans lequel une taille de l'électrode négative (200) est supérieure à une taille de l'électrode positive (100), et une épaisseur du faisceau laser (LB) correspond à une taille d'un écart entre une position où est disposé un côté de l'électrode négative (200) et une position où est disposé un côté de l'électrode positive (100) correspondant au côté de l'électrode négative (200).

3. Procédé de fabrication de l'ensemble électrode selon la revendication 2, dans lequel un premier côté (LB1) du faisceau laser dans une direction longitudinale coïncide avec le côté de l'électrode positive (100), et un second côté (LB2) du faisceau laser (LB) parallèle au premier côté coïncide avec le côté de l'électrode négative (200).

4. Procédé de fabrication de l'ensemble électrode selon la revendication 1, dans lequel le premier séparateur, le deuxième séparateur et le troisième séparateur sont formés en une seule feuille de séparation (300).

5. Procédé de fabrication de l'ensemble électrode selon la revendication 4, dans lequel la deuxième étape inclut le recouvrement de l'électrode positive (100) avec un côté de la feuille de séparation (300), et la quatrième étape inclut le recouvrement de l'électrode négative (200) avec l'autre côté de la feuille de séparation (300).

6. Procédé de fabrication de l'ensemble électrode selon la revendication 1, dans lequel la première étape à la quatrième étape sont effectuées de manière répétée, et une position d'émission du faisceau laser (LB) est fixée pendant le processus effectué de manière répétée.

7. Procédé de fabrication de l'ensemble électrode selon la revendication 1, dans lequel le faisceau laser (LB) est émis par un oscillateur laser (400), et une hauteur de l'oscillateur laser (400) par rapport à un objet exposé est réglée par un dispositif de réglage de hauteur (500).

8. Procédé de fabrication de l'ensemble électrode selon la revendication 7, dans lequel une épaisseur du faisceau laser (LB) s'amincit à mesure que la hauteur de l'oscillateur laser (400) augmente par rapport à l'objet exposé.

9. Appareil de fabrication d'un ensemble électrode dans lequel une électrode positive (100) et une électrode négative (200) sont alternativement empilées, et un séparateur est positionné entre l'électrode positive et l'électrode négative, comprenant un oscillateur laser (400) qui émet un faisceau laser (LB) vers l'électrode positive et l'électrode négative,
**caractérisé en ce qu'**une épaisseur du faisceau laser (LB) émis par l'oscillateur laser (400) correspond à une taille d'un écart entre une position où est disposé un côté de l'électrode négative (200) et une position où est disposé un côté de l'électrode positive (100) correspondant au côté de l'électrode négative (200).

10. Appareil de fabrication de l'ensemble électrode selon la revendication 9, comprenant en outre un dispositif de réglage de hauteur (500) connecté à l'oscillateur laser (400) et permettant de régler une hauteur entre l'oscillateur laser et un objet exposé,
dans lequel une épaisseur du faisceau laser (LB) s'amincit à mesure qu'une hauteur de l'oscillateur laser (400) augmente par rapport à l'objet exposé.
